# EUROPEAN PATENT APPLICATION

(11) **EP 2 869 611 A1**
(43) Date of publication of application: **06.05.2015**
(21) Application number: 13190850.1
(22) Date of filing: 30.10.2013
(51) Int. Cl.: H04W 8/12

(54) **Intercept and Gateway units for routing messages to an alternative roaming provider**

(71) Applicant: Teleena Holding B.V., 3431 HK Nieuwegein (NL)
(72) Inventor: Smit, Timo, 3431 HK Nieuwegein (NL); Baijens, Dirk, 3431 HK Nieuwegein (NL); Snijder, Rob, 3431 HK Nieuwegein (NL)
(74) Representative: Nederlandsch Octrooibureau

(57) **Abstract**

The invention provides a mobile communication message routing system (10, 20) comprising:
- an interception unit (20), configured to intercept a message from a roaming subscriber unit, the message comprising one of a signalling message and a charging message;
- an Alternative Routing Providers, ARPs, subscriber database (12);
- a gateway unit (10) connected to at least one ARP unit (2,2a,2b,2c),

wherein the system is configured to:
- query the database (12) for an ARP subscriber matching a subscriber indicated in the intercepted message; and
- when a matching ARP is found in the database, routing the message to the matching ARP (2,2a,2b,2c) via the gateway unit (10).

Detailed information:

Problem: EU "Roaming Regulation III" states that EU citizens should be able to choose an 'Alternative Roaming Provider' when they are abroad within the EU. This legislation would allow consumers to make use of any suitable ARP when abroad. instead of being limited to the services offered by the Domestic Service Provider, DSP. If the DSP is a Mobile Network Operator (MNO), he must interface with potentially limitless number or ARPs for all the services he provides (voice, data, SMS, billing, mobility, provisioning).

Solution: an interception unit intercept signalling or charging messages from a roaming mobile unit. The interception unit checks a subscriber database to see if the message relates to a subscriber of an ARP by matching an identifier (e.g. the MSISDN or IMSI of the mobile unit) to an ARP subscriber identifier in the database. If a match is found, then the message is routed, via a gateway, to the respective ARP.

## Description

### Field of the invention

The invention relates to a mobile communication message routing system for a mobile communications network and to a method for routing mobile communication messages in said network. The invention particularly relates to routing signalling and charging traffic from a Domestic Service Provider to a selected Alternative Roaming Provider (ARP).

### Background of the invention

. The European Union (EU) "Roaming Regulation III" states that EU citizens with a mobile subscription should be able to choose an 'Alternative Roaming Provider' when they are abroad within the European Union. This legislation would allow consumers to make use of any suitable ARP when abroad. instead of being limited to the services offered by the Domestic Service Provider, DSP.

For the DSP, this rather complicates things. If, in the consumer's home country, the DSP is a Mobile Network Operator (MNO), the MNO must somehow be able to cope with interfacing with a potentially limitless number of ARPs. Without the ARP legislation, the MNO needs only to integrate his platform with the platforms of the partners with which the MNO has made a roaming agreement, which is much less complex.

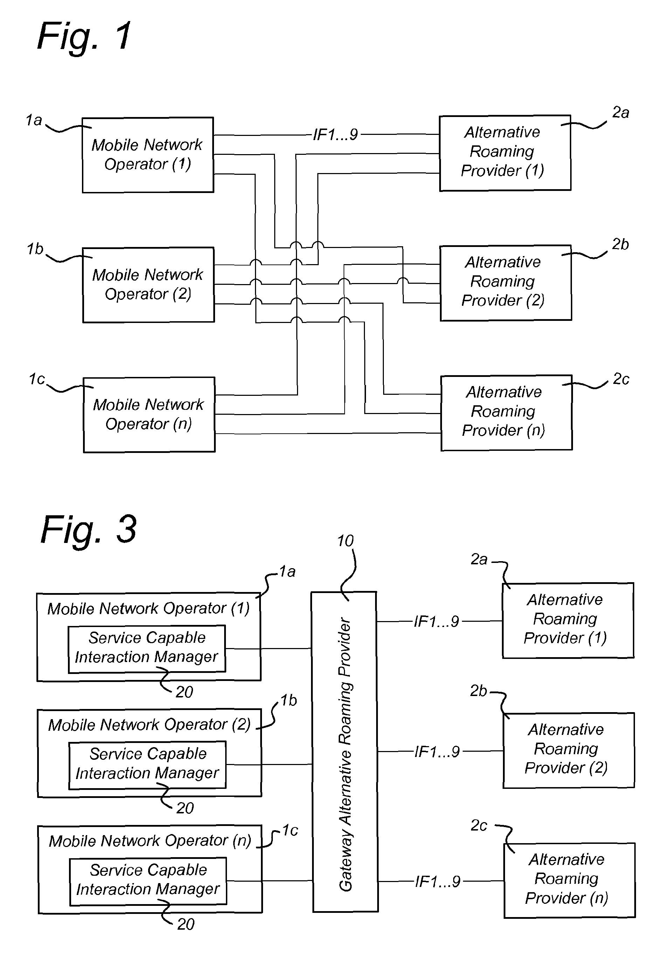

This situation is schematically indicated in figure 1. Each MNO 1a, 1b, 1c must make arrangements to connect to each potential Alternative Roaming Provider 2a, 2b, 2c. In the present example, with just three ARPs, each of the three MNOs must make three such arrangements, nine in total. When one realizes that each arrangement actually comprises at least 6 required interfaces for services, it is clear that with an increasing number of ARPs, the required operational involvement of an MNO with ARPs becomes overwhelming.

If the DSP is a virtual operator (MVNO), the situation is even more complicated. Now the connections with the potentially unlimited number of ARPs must be added to the existing combined platform of the MVNO and its national host MNO.

There is therefore a clear need for solutions that make integration with ARPs easier.

### Summary of the invention

The invention provides a mobile communication message routing system comprising:
- an interception unit , configured to intercept a message, the message comprising one of a signalling message or a charging message;
- an Alternative Roaming Providers (ARPs) subscriber database ;
- a gateway unit connected to at least one ARP unit ,
wherein the system is configured to:
- query the database for an ARP subscriber matching an identifier indicated in the intercepted message; and
- when a matching ARP subscriber is found in the database, routing the message to the corresponding ARP via the gateway unit

The interception unit can receive or intercept messages from a roaming mobile unit in a mobile communications network. These messages will typically relate to signalling or charging. In particular, these messages can relate to the interfaces between an MNO and ARP, as for example defined by the Body of European Regulators for Electronic Communications (BEREC). The interception unit checks a subscriber database to see if the message relates to a subscriber of an Alternative Roaming Provider by matching an identifier, in particular a unique user identifier in the intercepted message, for example the end user MSISDN or IMSI, to an ARP subscriber identifier in the database. If a match is found, then the message is routed, via a gateway, to the respective ARP. This system advantageously allows an MNO of a DSP to allow its subscribers to use ARPs, without the need for the MNO to integrate with every ARP. Instead, this integration task is delegated to the ARP gateway (also termed GARP, for Gateway to ARP). The gateway can advantageously serve multiple MNOs, requiring the integration with each ARP only once. If no match is found in the database, the message is handled in the default way.

In a further embodiment according the invention, on reception of a message the interception unit may check if the intercepted message originated from a network that is applicable to the EU III regulations. In other words, the criterion is whether the user is roaming in a VPLMN that must comply with ARP regulation. Depending on details of the legislation, the criterion could include all VPLMNs in EU member states, and exclude all other VPLMNs. This optional check can for example be done based on the SCCP Global Titles of the nodes in the VPLMN where the user is registered (and where the DSP may have a roaming agreement with). If the message does not seem to originate from such network, then the ARP subscriber database query can be omitted. This advantageously makes the process more efficient and reduces overhead.

In an embodiment according the invention, the interception unit or the gateway unit is configured to, when a matching ARP subscriber is found in the database, alter selected attributes in the message prior to routing said message. This advantageously makes routing more efficient. In an embodiment according the invention, the selected attribute is at the routing level (e.g. SCCP GT/TT) or at an application level (MAP MSISDN/IMSI, CAMEL SK, Diameter Realm/any AVP).

In an embodiment according the invention, the interception unit is connected to at least one message routing node of a Mobile Network Operator for receiving messages from said at least one message routing node. In an embodiment according the invention, the at least one message routing node comprises a Signalling Transfer Point (STP) of a Mobile Network Operator, MNO for routing signalling messages. In an embodiment according the invention, the at least one message routing node comprises a Diameter Routing Agent (DRA) of a Mobile Network Operator (MNO) for routing charging or signalling messages. By receiving messages directly from an STP or DRA, an efficient integration can be achieved. When it turns out that the message does not relate to an ARP subscriber, the interception unit can immediately return the message to the originating message node (e.g. the STP or DRA) for default routing.

In an embodiment, the messages, for example the signalling messages, are MAP and/or CAMEL messages. In an embodiment, the messages, for example the signalling or charging messages, are Diameter messages. A mixture of both types of messages will typically be used in a real-world system. At the application level, both MAP/CAMEL and Diameter can be used.

In an embodiment according the invention, for each MNO connected to the gateway, an interception unit is provided. The interception unit may be provided at the site of the MNO, for efficient integration in the MNO infrastructure. In this example, each DSP has one interception unit, while the gateway of the system is shared by a plurality of DSPs. In an embodiment according the invention, the database is integrated with the gateway. This advantageously reduces the complexity of the interception unit and allows for centralized database maintenance. In an embodiment, the optional check of determining if the message corresponds to a VPLMN that is under the legislation (for example an ARP) can be performed by the interception unit.

In an embodiment according the invention, the gateway is configured to connect at least the following interfaces with each ARP :
- an online interface for voice retail billing, using Camel or Diameter ;
- an online interface for SMS retail billing, using Camel or Diameter;
- an online interface for Data/MMS retail billing, using Diameter ;
- an interface for providing mobility information to the ARP, to inform the ARP that one of its customers has started to roam or has changed networks ;
- an interface for WS Billing ; and
- an interface for CRM, subscriber provisioning API

In an embodiment according the invention, the system comprises a Home Location Register (HLR) capable to communicate with a MNO acting as visited network for a subscriber unit. Such a gateway can advantageously provide services needed by a virtual operator (MVNO). A single platform can thus provide a number of services (host MNO integration and ARP integration) to an MVNO.

The invention further provides a method for routing mobile communication messages, the method comprising
- intercepting a message of a roaming subscriber unit via a message routing node , the message comprising one of a signalling message and a charging message;
- querying a subscriber database of Alternative Roaming Providers (ARPs), for an ARP subscriber matching an identifier indicated in the intercepted message;
- when a matching ARP subscriber is found in the database, routing the message to the corresponding ARP .

In an embodiment according the invention, the message comprises, when a matching ARP subscriber is found in the database, altering the message prior to routing the message to the matching ARP.

In an embodiment according the invention, the message relates to one of mobility management, call setup, messaging event, and session create/update/delete messages.

In an embodiment according the invention, the message comprises a charging trigger message.

The invention advantageously thus allows to aggregate multiple ARPs on the MNOs' behalf without the need of having huge changes in the MNOs' core infrastructure. In addition, a solution for MVNOs aims to fulfil the regulatory obligations on behalf of these MVNOs.

### Brief description of the Figures

On the attached drawing sheets,
- figure 1 schematically shows a system of Mobile Network Operators and Alternative Roaming Providers;
- figure 2 schematically shows interfaces between a domestic service provider and an Alternative Roaming Provider;
- figure 3 schematically shows a system of Mobile Network Operators, Alternative Roaming Providers, and a gateway according to an embodiment of the invention;
- figure 4 and 4a schematically show a Service Capable Interaction Manager according to an embodiment of the invention;
- figure 5 schematically shows a gateway according to an embodiment of the invention;
- figure 6 schematically shows session message interaction between various network components according to an embodiment of the invention; and
- figure 7 schematically shows charging message interaction between various network components according to an embodiment of the invention.

### Detailed description

Before exemplary embodiments are disclosed, a list of used abbreviations is presented:
- APN Access Point Name
- ARP Alternative Roaming Provider
- AVP Attribute Value Pair
- BEREC Body of European Regulators for Electronic Communications
- CAMEL Customised Applications for Mobile network Enhanced Logic
- CAP CAMEL Application Part
- CCR Credit Control Request
- CDR Call Detail Record
- CSI CAMEL Subscription Information
- DP Detection Point
- DRA Diameter Routing Agent
- DSP Domestic Service Provider
- EU European Union
- GARP Gateway to Alternative Roaming Provider
- GGSN Gateway GPRS support node
- GPRS General Packet Radio Service
- gsmSCF GSM Service Control Function
- gsmSRF GSM Specialized Resource Function
- GT Global Title
- GTP GPRS Tunneling Protocol
- GTP-C GTP Control
- HLR Home Location Register
- HSS Home Subscriber System
- ID IDentifier
- IDP Initial Detection Point
- IF Interface
- ISD Insert Subscriber Data
- IMSI International Mobile Subscribe Identity
- LU Location Update
- MAP Mobile Application Part
- MMS Multimedia Messaging Service
- MNO Mobile Network Provider
- MSISDN Mobile Subscriber ISDN Number
- MT Mobile Terminating
- MVNO Mobile Virtual Network Provider
- NRTRDE Near Real Time Roaming Data Exchange
- OCS Online Charging System
- OMA RESTful Open Mobile Alliance REpresentational State Transfer
- PLMN Public Land Mobile Network
- SCCP Signalling Connection Control Part
- SCIM Service Capability Interaction Manager
- SCP Service Control Point
- SI Service Indicator
- SMPP Short Message Peer-to-Peer
- SMS Short Message Service
- SMSC Short Message Service Centre
- SSN Sub-System Number
- STP Signalling Transfer Point
- SS7 Signalling System no. 7
- TADIG Transferred Account Data Interchange Group
- TAP Transferred Account Procedure
- TT Translation Type
- USSD Unstructured Supplementary Service Data
- VPLMN Visited PLMN
- WAG WLAN Access Gateway
- WLAN Wireless Local Area Network

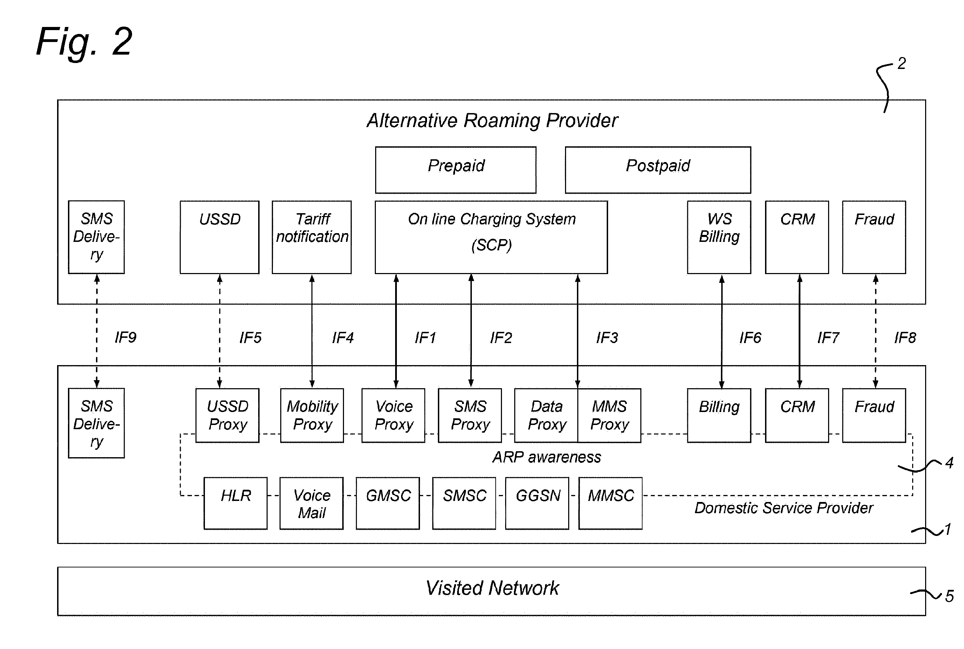

Figure 2 schematically shows interfaces that have been defined between a Domestic Service Provider (DSP) and an Alternative Roaming Provider. This figure will be used to illustrate the interfaces that are to be implemented between an ARP and a gateway according the invention. The figure is based on a figure from "EU Roaming regulation III Interface & Protocol Detailed Technical specifications" version 1.0 (updated 24/7/2013) by the Body of European Regulators for Electronic Communications (BEREC).

The ARP 2 setup uses a proxy approach for network signalling. The existing MAP interface for the subscriber authentication and mobility management is not drawn in figure 2. This interface will however remain active, which also means that the DSP will still control the Home Location Register (HLR) or Home Subscriber System (HSS) profiles for the roaming subscriber even when the user is using an alternative roaming provider.

The mentioned interfaces can have the following functionality and use the following protocols:
- IF1: An online interface for voice retail billing (Camel or Diameter).
- IF2: An online interface for SMS retail billing (Camel or Diameter).
- IF3: An online interface for Data/MMS retail billing (Diameter).
- IF4: An interface for providing mobility information to the ARP, to inform the ARP that one of its customers has started to roam or has changed networks (OMA RESTful network API).
- IF5: online USSD interface to enable the ARP to provide pre-paid account queries (optional).
- IF6: WS Billing (TAP will most likely be used)
- IF7: CRM (subscriber provisioning API)
- IF8: Fraud (NRTRDE records)
- IF9: SMS delivery interface (optional); e.g. to trigger tariff notification message (SMPP).

Note that interfaces IF5, IF8 and IF9 are optional and can be commercially and technically negotiated between parties.

In order to make sure that messages (for example signalling traffic and charging messages) arriving at MNOs arrive at the correct ARP, there are several technical approaches to implement the various defined interfaces to be compliant with the legislation. There is some freedom for an MNO or ARP gateway provider so consider which solution fits best in its network, is the easiest to implement and is most cost effective. A few approaches are described below.

One method is to intercept live SCCP roaming messages and change fields before onward routing the messages. This SCCP traffic can be intercepted by the STPs that route the international signalling. Changes can be made in the routing layer (SCCP) to direct the signalling to an alternative node. The SCCP messages can also be made unique by applying a specific 'ARP' SSN or TT for example. Changes can also be made in the application layer (MAP/CAP). For example the SCP global title in a MAP ISD operation can be altered or the Service key in a CAP IDP can be changed. Changes in SCCP/MAP/CAP messages must be based on whether a subscriber has an ARP subscription.

The Diameter protocol is an AAA protocol that in this context is used for real time charging. Diameter messages can be intercepted and onward routed with altered parameters similar to SCCP messages. Diameter is a protocol that uses a 'capabilities exchange' mechanism between client and server before setting up end user sessions. Every end user charging session has an own session identifier. This method allows only changes in parameters between the same end nodes. It also has limitations in changes made in the Attribute Value Pairs (AVPs) on a per session base. When for example a charging session needs to be setup to another charging node than the default one, then the new peers must first setup a session before end user sessions can be setup. This makes real time interception and alternative routing for Diameter traffic more difficult than SCCP traffic. An advantage of intercepting real time Diameter messages for the use of data sessions is that the original APN can be maintained. Therefore no user interaction is needed to benefit from the ARP mobile data roaming services.

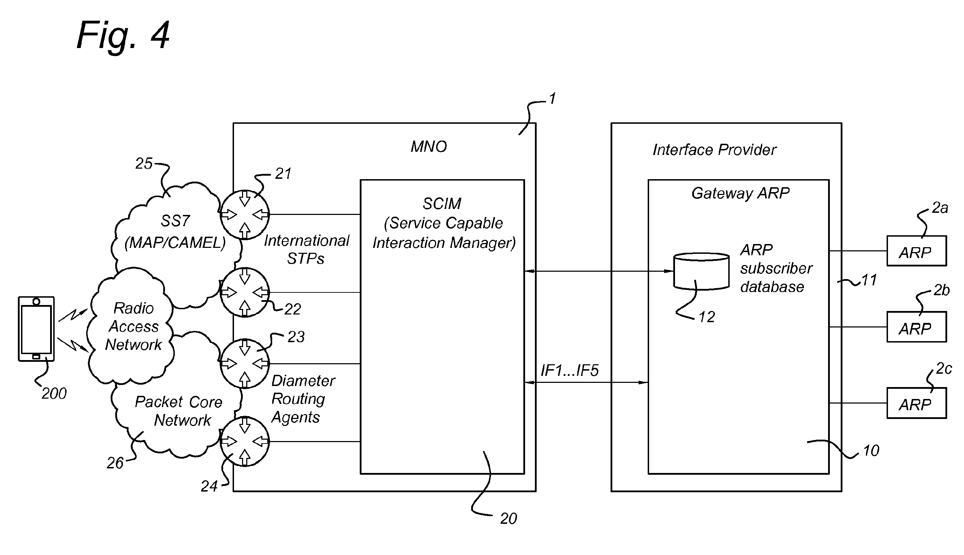

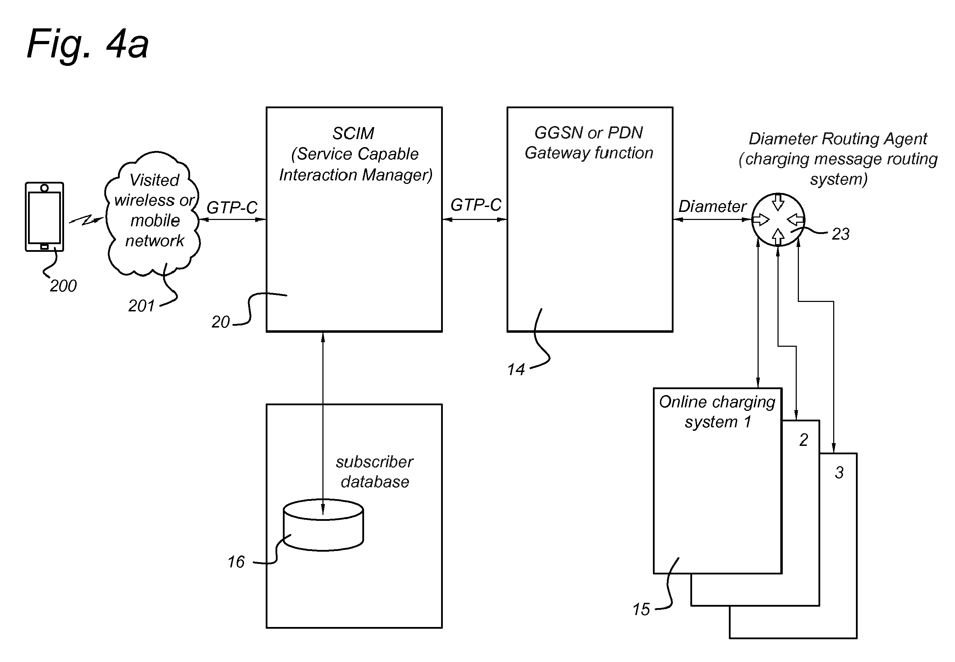

GTP control messages for mobile data sessions are used between SGSN (or S-GW or WAG) and GGSN (or P-GW) to setup and control end user sessions. These messages can be intercepted and changed in a similar way as SCCP messages. GTP-C is not one of the protocols described in the SI setup. Several of the GTP-C message parameters are mapped to Diameter AVPs by the GGSN. GTP-C messages may be easier to change than Diameter messages because of its protocol stack. Therefore interception and changing of GTP-C parameters may be an alternative way to 'tell' the DSP's GGSN which OCS to use. More exemplary details on intercepting GTP control messages are provided below in reference to figure 4a.

Another method, that is more in line with the GSM/3GPP standards, is to apply an alternative HLR EU roaming profile when a subscriber uses ARP services. This HLR profile must be provisioned in the DSP HLR. In this profile an alternative gsmSCF global title (ARP SCP/gsmSCF) must be applied for EU networks so that CAP traffic will be routed to this alternative node. HLR/HSS provisioning is vendor specific.

The above described methods that use traffic interception all need to know if a user has an active ARP subscription. This information will most likely be stored in the DSP's BSS, a Subscriber Profile Repository (SPR) or a dedicated database. Status of a subscriber can be obtained using any kind of querying mechanism like LDAP, SQL, or a proprietary method. Message exchange can use HTTP(s), REST, XML or any other IP based protocol.

DSPs often push APN settings to handsets in order to minimize user interaction for setting up mobile data services. When an end user is subscribed to an ARP or LBO offer, then the DSP APN push mechanism should be switched off to avoid that the end user will still use the DSP's data plan.

Figure 3 schematically shows a system of Mobile Network Operators 1a, 1b, 1c, Alternative Roaming Providers 2a, 2b, 2c, and a gateway 10 according to an embodiment of the invention.

Each MNO 1a, 1b, 1c is provided with a Service Capable Interaction Manager (SCIM) 20, which acts as an interception unit for intercepting signalling traffic. It is preferred to physically locate the SCIM hardware at the premises of the MNO where the signalling traffic or messages is to be intercepted. This is, however, not required. What is key is that the SCIM hardware is able to analyze the signalling traffic or, generally, messages which arrive at the MNO and to forward selected traffic/messages to an ARP, possibly via a gateway 10, and possibly with altered data. For reasons of efficiency, it is preferred to perform this filtering at the MNO, so that traffic/messages that is not relevant for the SCIM (not ARP related) is not needlessly rerouted or delayed. The functioning of the SCIM will be described in more detail in reference to figure 4.

In the setup of figure 3, the ARPs 2a, 2b, 2c will serve the subscribers of the MNOs 1a, 1b, 1c. The advantages for the MNO when integrating with the gateway 10 is that only one platform (the gateway) needs to be integrated, significantly reducing the operational involvement with ARPs. For the MNO this leads to lower Capital Expenditures (CAPEX) and Operational Expenditures (OPEX) to fulfil the regulatory requirements.

In the following paragraphs, exemplary implementations of the interfaces IF1 - IF9 of figure 2 will be discussed. The gateway 10 implements all required interfaces with each of the ARPs 2a, 2b, 2c.

CAMEL triggers can be used mainly for voice services. The proxy setup for IF1 (and IF2 for SMS) can be implemented in several different ways: 1. Controlled in the HLR/HSS profile (normally maintained by the MNO), 2. by address translation and onward routing by the DSP SCP/gsmSCF to the ARP SCP/gsmSCF or 3. by intercepting the messages, querying a database using a subscriber identifier in the message, and alter one or more message identifiers so that it can be routed based on the changed parameter(s) in the message. The first method involves HLR/HSS provisioning and implementation of additional SCCP routes. The second method involves an ARP parameter that needs to be checked in the SCP/gsmSCF node to trigger the address translation. The third method is the preferred method and will be further described below.

*Voice*: The DSP can proxy CAMEL messages to the gateway SCP/gsmSCF GT. The gateway 10 can onward route these triggers to the ARP SCP/gsmSCF GTs. The gateway SCP/gsmSCF needs to have an ARP parameter (ARP ID) to be checked for each subscriber. Based on this ARP ID the SCCP CdPA can be changed and the message can be onward routed to the ARP SCP/gsmSCF.

*Voice MO*: CAMEL triggers can be routed to the ARP SCP. The gateway 10 could allow the ARP to route the traffic using a pre-defined block of gateway TSAN numbers (using CAMEL connect) and onward route the call to the final destination. Only when the destination number of the call is within the same country as where the subscriber roams, the call could be directly routed to the destination network. Of course emergency calls will always be routed directly by the visited PLMN to the local emergency service center.

*Voice MT*: MT calls to an ARP subscriber that is roaming in the EU will be routed to the DSP's gMSC. This will trigger a CAMEL IDP message towards the ARP SCP node via gateway 10. The ARP SCP can now further control the call.

*Voicemail*: The user shall use the DSP's voicemail services in roaming conditions when this service is active for domestic services.

*Service numbers*: The customer service number will be different in roaming situations (=ARP customer service) then in home country (=DSP customer service).

*SMS*: In the preliminary ARP documentation, on-line charging of SMS is described as being used with CAMEL triggers or using Diameter between DSP and ARP. Currently neither CAMEL nor Diameter are commonly being used for this purpose. Instead charging based on MAP or SMPP events is being used. Therefore an interworking function between MAP/SMPP and CAMEL/Diameter might be desired.

*SMS MO*: When CAMELv3 triggers are used for SMS MO risk on fraud can be eliminated. Alternatively, CAMELv2, which is more widely supported than v3, can be used.

*SMS MT*: SMS MT does not need any changes to current setup. MT messages are already free of charge for the receiving party.

*MMS*: MMS charging can be established using a Diameter interface between DSP and ARP. MMS traffic can be routed by the DSP as it is working today. Real-time Diameter based charging principles are described in 3GPP TS32.240 and TS32.299. It is assumed that a specific ARP APN can be used.

*Mobile data services*: Mobile data traffic can be routed by the DSP. A Diameter Gy interface needs to be established between the GGSN of DSP and ARP. Real-time Diameter based charging principles are described in 3GPP TS32.240 and TS32.299. Data can be charged time based or volume based. According to preliminary documentation, a separate APN may be provisioned for ARP mobile data services.

*Provisioning:* When a subscriber wants to opt in for an alternative EU roaming partner, he/she will be able to setup a roaming subscription with an ARP that can be activated within one working day (24 hours). Specification of IF7 is at the time of filing a work in progress.

*Wholesale billing:* TAP will likely be the DSP preferred format for CDR feed. DSP is leading in deciding the format.

Figure 4 schematically shows a Service Capable Interaction Manager (SCIM) 20 according to an embodiment of the invention. The SCIM 20 is a node that intercepts MAP, CAMEL and Diameter signalling messages. The messages originate from a roaming mobile unit 200 and arrive at the SCIM via a Radio Access Network, in particular via a SS7 network 25 (for e.g. MAP/CAMEL messages) and/or a Packet Core Network 27. In general, the SCIM can be described as an interception unit which is configured to intercept messages from a mobile network, the messages having relevance for e.g. signalling, charging, etc.

MAP stands for Mobile Application Part; a protocol that typically takes care of the mobility management, authentication, call setup, short message service, setting of user settings by end users and other functions in a mobile network. CAMEL is the protocol that enables customized applications for mobile users, for example prepaid services. Diameter is a protocol that is being used in mobile networks (in this context) for charging mobile data, MMS or SMS sessions.

The SCIM is in connection with one or more message routing nodes. A message routing node can for example be a Signalling Transfer Point (STP) 21, 22 or a Diameter Routing Agent (DRA) 23, 24. The SCIM can intercept (receive) messages that pass through the one or more message routing nodes 21, 22, 23, 24.

On reception of a message the SCIM 20 may check if requests are originated from a network that is applicable to the EU III regulations. This optional check can be done based on the SCCP Global Titles of the nodes in the VPLMN where the user is registered (and where the DSP has a roaming agreement with). If that is the case then it will query the ARP subscriber database 12. When this query returns a match in the database, the request will be onward routed by the gateway 10 to the relevant ARP 2a, 2b, 2c that further handles the request. The SCIM also intercepts LU messages that trigger SI IF4. When a MAP/CAMEL/Diameter message does not belong to an active ARP subscriber, then the traffic is routed back to e.g. the Signalling Transfer Point (STP) 21, 22 or e.g. Diameter Routing Agent (DRA) 23, 24 that can route it to its original/final destination.

In embodiments of the invention, the SCIM can be configured to make use of or even alter specific MAP operations: These are however examples; the solution should be flexible to use any operation and alter any field in the message.

MAP Update_Location messages can be used to identify a EU roaming ARP subscriber. This information can be used for SI IF4 to notify the ARP that a subscriber starts and stops roaming in EU.

MAP Insert_Subscriber_Data messages can be altered. For example the CSI parameters can be changed or the gsmSCF. It depends on the MNO's requirements and preferences how exactly to differentiate between MNO and ARP subscribers.

USSD strings can be modified or unchanged onward routed to the ARP (SI IF5) to enable balance queries, top-ups, tariff information, etc.

MO_ForwardSM messages can be forwarded. Although the Interface & Protocol workgroup has defined CAMEL and Diameter as preferred protocols to retail charge SMS messages, it is not very likely that either is used. CAMELv3 that is needed is not very well deployed for roaming scenarios, and Diameter is not a commonly available charging interface for SMSs. Therefore forwarding of MO_ForwardSM messages could be an alternative.

CAMEL IDPs may be routed to the ARP based on specific ARP SCP GT, Service Key, calling party number (MSISDN) or IMSI. SI IF1 and SI IF2 are applicable for this scenario.

Mobile data sessions and MMS messages use a Diameter charging method. Credit Control Request (CCR) messages can be inspected and in case a message belongs to an ARP subscriber, then the CCR can be routed to the ARP (SI IF3). The SCIM can setup separate credit control sessions to the ARP OCS. When the message belongs to an MNO subscriber (or when the session is originated outside EU or inside the domestic country) it can be routed back to the MNO's DRA without interfering with the original Credit Control session.

A further example of user data message handling by a SCIM 20 is shown in figure 4a. To transport user data and control sessions in mobile networks or Wi-Fi networks, the GPRS Tunneling Protocol (GTP) may be used. GTP-C is a subset of the GTP protocol and is used for the control of the sessions. The 'C' refers to 'Control'. GTP-C messages contain parameters that indicate the end user (e.g. MSISDN, IMSI, IMEI), the connected radio access network and Quality of Service parameters. Sessions are controlled using operations like 'Create PDP Context', 'Update PDP Context' and 'Delete PDP context' with their relevant parameters. These messages are nowadays exchanged between SGSN (2G/3G), Serving GW (LTE), WAG (WLAN access gateway, Wi-Fi) at the access side, and the GGSN/PDN GW 14 at the core network side. The GGSN/PGW maps certain parameters from GTP to e.g. Diameter to enable e.g. charging.

In the setup in figure 4a the SCIM 20 is in the GTP-C path, intercepting the messages originated from SGSN/S-GW/WAG. Message parameters can be altered or inserted based on subscriber database 16 lookup. In an embodiment, subscriber database 16 is the same as database 12 of figure 4. A specific parameter, such as for example the Access Point Name in the GTP-C message will result in an alternative APN being used at the GGSN/P-GW 14 and resulting in a different charging profile being used that refers to an alternative online charging system 15. From there, the message is handled by the DRA 23. The DRA 23 can be in connection with one or more online charging systems 15.

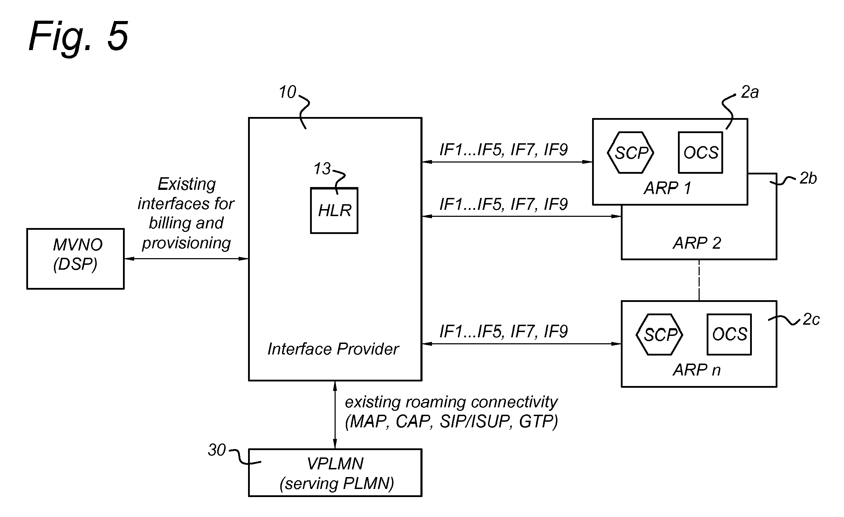

Figure 5 schematically shows a gateway 10 for servicing MVNOs according to an embodiment of the invention. In case the DSP is a MVNO, the necessary infrastructure connecting the MVNO with a host provider's physical radio network can be advantageously integrated. The ARP gateway 10 is in that case also termed an ARP connector. The ARP gateway 10 for MVNOs comprises a HLR for the MVNO. The signalling traffic interception and rerouting can be handled internally in the gateway 10. In other words, in this embodiment the SCIM is integrated in the gateway 10.

The MVNO can setup its own legal and commercial agreement with the ARP. The gateway 10 can facilitate the necessary network interfaces. Provisioning of ARP subscribers can be done directly by the ARP onto the gateway's MVNE network. Wholesale billing and fraud control can be done directly between MVNO and ARP.

The following sections describe in more detail the interfaces.

*IF1 Voice retail billing:* This interface can be a CAMEL interface. The gateway 10 can provision the ID of the active ARP subscription in its SCP/gsmSCF. This ID can for example be the TADIG code of the ARP. If there is such an ID present and the subscriber is roaming within the EU, then the gateway SCP/gsmSCF can onward route the CAMEL messages to the ARP SCP/gsmSCF.

*IF2 SMS retail billing*: CAMELv3 may be used, or alternatively Diameter. In the latter case, the SMS-R/SMS-C may be configured with a Diameter client interface.

*IF3 Data*/*MMS charging:* It is assumed that a specific ARP APN will be used for mobile data. This APN can point to a specific ARP OCS. MMS currently does not need to be supported by ARPs to be compliant with the EU legislation.

*IF4 Mobility interface:* OMA RESTful network API to inform ARP when a subscriber starts/stops to roam within EU.

*IF5 USSD*: USSD interface that enables the ARP subscriber to obtain real-time balance information. The USSD requests must therefore be proxied to the ARP USSD gateway. This can be done using the same logic as is being described for the CAMEL messages.

*IF7 CRM*: Provisioning interface.

*IF9 SMS delivery*: Optional SMPP interface that can be used for e.g. real-time notifications.

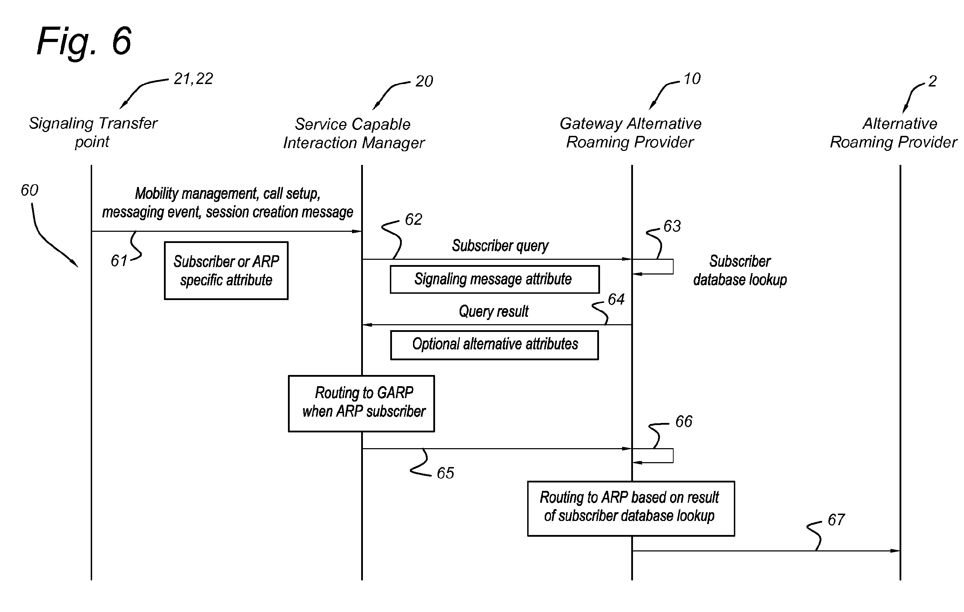

Figure 6 schematically shows session message interaction 60 between various network components according to an embodiment of the invention. Figure 6 shows how SCCP messages can be intercepted and optionally their attributes changed before onward routing. SCCP messages can be MAP or CAMEL messages. Relevant operations are for example: MAP InsertSubscriberData, MAP MO_ForwardSM or CAMEL InitialDP. Subscriber or ARP specific attributes can be MSISDN, IMSI, ARP allocated Service Key, etc.

In action 61 an SCCP message relating to one of mobility management, call setup, messaging event, and session creation passes a STP 21, 22 and is intercepted by the SCIM 20. The message comprises a subscriber or ARP specific attribute.

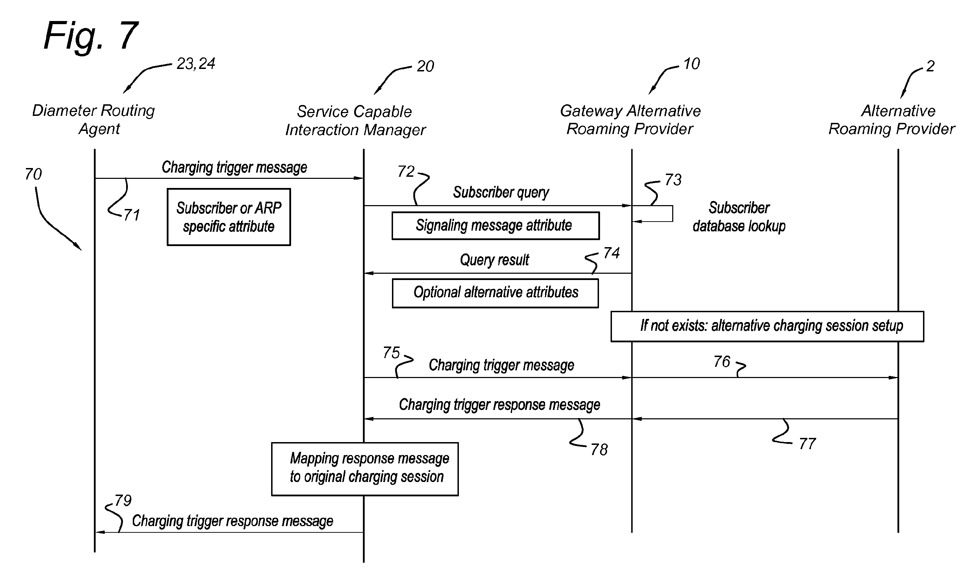

In an optional step, not shown in figures 6 and 7 but applicable to both figures, the system first determines if the message corresponds to an ARP. If this is not the case, the database query of action 62 or 72 can be omitted, and the message can be handled in a default way. This optional check can for example be done based on the SCCP Global Titles of the nodes in the VPLMN where the user is registered (and where the DSP has a roaming agreement with).

In action 62, the specific attribute from the message is used in a database query. In action 63, at the gateway 10, a subscriber identity is retrieved in the database based on the message attribute. The result is transmitted by the database (in the gateway 10) to the SCIM 20. The result may optionally comprise further alternative attributes.

If the subscriber is an ARP subscriber, the intercepted message is routed to the gateway 10 in action 65. In action 66, the gateway 10 can perform another database lookup to determine the destination ARP. The gateway 10 can also make use of the earlier database query result. The gateway 10 routes the message to the required ARP 2. Attributes of the message may be modified as for example described in reference to figures 3-5 by either the SCIM 20, the gateway 10, or both.

Figure 7 schematically shows charging message interaction 70 between various network components according to an embodiment of the invention.

In action 71, a charging trigger message comprising a subscriber or ARP specific attribute passes DRA 23, 24 and is intercepted by SCIM 20. Actions 72, 73, and 74 are similar to the actions 62, 63, and 64 as described in reference to figure 6 and will not again be described here.

In action 75, the charging trigger message is sent to the gateway 10, which forwards it to the required ARP 2. A charging session is setup between gateway 10 and ARP 2 when a charging event is triggered (e.g. for an individual end-user data session setup) if a session between the two peers did not already exist (e.g. triggered by a previous end-user data session).

The ARP returns a response message to the gateway 10 in action 77, which is forwarded by the gateway 10 to SCIM 20. Either the gateway 10 or the SCIM maps the response message to the original charging session. The mapped response message is then sent to the DRA 23, 24.

In the foregoing description of the figures, the invention has been described with reference to specific embodiments thereof. It will, however, be evident that various modifications and changes may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Mobile communication message routing system (10, 20) comprising:
- an interception unit (20), configured to intercept a message from a roaming subscriber unit, the message comprising one of a signalling message or a charging message;
- an Alternative Roaming Providers, ARPs, subscriber database (12);
- a gateway unit (10) connected to at least one ARP unit (2,2a,2b,2c),
wherein the system is configured to:
- query the database (12) for an ARP subscriber matching an identifier indicated in the intercepted message; and
- when a matching ARP subscriber is found in the database, routing the message to the corresponding ARP (2,2a,2b,2c) via the gateway unit (10)

2. Mobile communication message routing system (10, 20) according to claim 1, wherein the interception unit (20) or the gateway unit (10) is configured to, when a matching ARP subscriber is found in the database, alter selected attributes in the message prior to routing said message.

3. Mobile communication message routing system (10, 20) according to claim 2, wherein the selected attribute is at the routing level or at an application level.

4. Mobile communication message routing system (10, 20) according to any one of the previous claims, wherein the system is configured to first determine if the intercepted message originates from a VPLMN which meets a predetermined criterion, such as a VPLMN that must comply with ARP legislation, before querying the database (12).

5. Mobile communication message routing system (10, 20) according to any one of the previous claims, wherein the interception unit (20) is connected to at least one message routing node (21, 22, 23, 24) of a Mobile Network Operator (1) for receiving messages from said at least one message routing node.

6. Mobile communication message routing system (10, 20) according to claim 5, wherein the at least one message routing node comprises a Signalling Transfer Point, STP, (21,22) of a Mobile Network Operator, MNO (1) for routing signalling messages.

7. Mobile communication message routing system (10, 20) according to claim 5 or 6, wherein the at least one message routing node comprises a Diameter Routing Agent, DRA, (23,24) of a Mobile Network Operator, MNO (1) for routing charging or signalling messages.

8. Mobile communication message routing system (10, 20) according to one any one of the previous claims, wherein for each MNO (1, 1a, 1b, 1c) connected to the gateway (10), an interception unit (20) is provided.

9. Mobile communication message routing system (10, 20) according to any one of the previous claims, wherein the database (12) is integrated with the gateway (10).

10. Mobile communication message routing system (10, 20) according to any one of the previous claims, wherein the gateway (10) is configured to connect at least the following interfaces with each ARP (2, 2a, 2b, 2c):
- an online interface for voice retail billing, using Camel or Diameter (IF1);
- an online interface for SMS retail billing, using Camel or Diameter (IF2);
- an online interface for Data/MMS retail billing, using Diameter (IF3);
- an interface for providing mobility information to the ARP, to inform the ARP that one of its customers has started to roam or has changed networks (IF4);
- an interface for WS Billing (IF6); and
- an interface for CRM, subscriber provisioning API (IF7)

11. Mobile communication message routing system (10, 20) according to any one of the previous claims, further comprising a Home Location Register, HLR, (13) capable to communicate with a MNO acting as visited network (30) for a subscriber unit.

12. Method (60, 70) for routing mobile communication messages, the method comprising
- intercepting (61, 71) a message of a roaming subscriber unit via a message routing node (21, 22, 23, 24), the message comprising one of a signalling message and a charging message;
- querying (62, 72) a subscriber database (12) of Alternative Roaming Providers, ARPs, for an ARP subscriber matching a subscriber indicated in the intercepted message;
- when a matching ARP subscriber is found in the database, routing (67, 76) the message to the corresponding ARP (2,2a,2b,2c).

13. Method (60, 70), according to claim 11, comprising
- when a matching ARP subscriber is found in the database, altering the message prior to routing the message to the matching ARP.

14. Method (60) according to claim 11 or 12, wherein the message relates to one of mobility management, call setup, messaging event, and session create messages.

15. Method (70) according to claim 11 or 12, wherein the message comprises a charging trigger message.
